Europäisches Patentamt

European Patent Office

Office européen des brevets

(19)

(11) Veröffentlichungsnummer : **0 109 501**
**B1**

(12)

## EUROPÄISCHE PATENTSCHRIFT

(45) Veröffentlichungstag der Patentschrift :
**30.12.86**

(21) Anmeldenummer : **83109172.3**

(22) Anmeldetag : **16.09.83**

(51) Int. Cl.⁴ : **B 01 D 46/12, G 21 F 9/02**

(54) **Wechselfiltereinsatz.**

(30) Priorität : **22.10.82 DE 3239110**

(43) Veröffentlichungstag der Anmeldung :
**30.05.84 Patentblatt 84/22**

(45) Bekanntmachung des Hinweises auf die Patenterteilung : **30.12.86 Patentblatt 86/52**

(84) Benannte Vertragsstaaten :
**BE CH FR GB LI NL**

(56) Entgegenhaltungen :
**WO-A-82 /013 25**
**FR-A- 1 529 632**

(73) Patentinhaber : **Kernforschungszentrum Karlsruhe
GmbH**
**Weberstrasse 5 Postfach 3640**
**D-7500 Karlsruhe 1 (DE)**

(72) Erfinder : **Dillmann, Hans Georg**
**Luisenstrasse 62**
**D-7514 Eggenstein-Leop 1 (DE)**
Erfinder : **Pasler, Horst**
**Zur Insel Rott Nr. 2 - 3**
**D-7515 Linkenheim-Ho. 2 (DE)**

# Beschreibung

Die Erfindung betrifft einen Wechselfiltereinsatz nach dem Oberbegriff des Patentanspruches.

Filtereinsätze dieser Art sollen möglichst mehrfach verwendet werden, um den Anfall von Abfällen zu verringern. Gebräuchlich sind zum einen Wegwerfzellen und zum anderen Wechselzellen mit den Verschlußdeckeln auf der Oberseite. Diese Verschlußdeckel auf der Oberseite bringen jedoch die Gefahr von mechanischen Leckagen.

Aus der FR-PS-1 529 632 ist eine normale Wechselfilterzelle bekannt, die aus Papier, Holz oder Kunststoff besteht und die als nicht nachfüllbare Wegwerfzelle zu bezeichnen ist.

In der WO-A-8 201 325 ist ein Filtergehäuse zur Aufnahme von Wechselfiltereinsätzen dargestellt. Die Filtereinsätze sind mit dem Filtergehäuse verspannt und werden rohluftseitig ausgewechselt. Nach Auswechslung werden die benutzten Filterzellen weggeworfen.

Aufgabe der vorliegenden Erfindung ist es nun, eine mehrfach verwendbare Filterzelle zu schaffen, bei der die Gefahr von Leckagen an der Mechanik des Verschlußdeckels verringert wird. Zur Lösung dieser Aufgabe schlägt nun die Erfindung die Merkmale in ihrer Kombination vor, die im Kennzeichen des Patentanspruches aufgeführt sind.

Durch eine solche Ausbildung weist nun der Deckel keine Dichtungsfunktion mehr auf, da er auf die Filterzellenabströmseite gelegt ist. Infolge der Pressung von z. B. Kohle kann diese auf ein größtmögliches Volumen optimiert werden. Der besondere Vorteil der vorliegenden Erfindung besteht nun darin, daß bei einer häufigen Wiederverwendbarkeit des Zellengehäuses zur Abfallminimierung eine unkritische Neubefüllung ermöglicht wird und die Leckagebildung an der Filterzelle vermindert ist.

Weitere Einzelheiten der Erfindung werden im folgenden und anhand der Figur näher erläutert. Es zeigen :

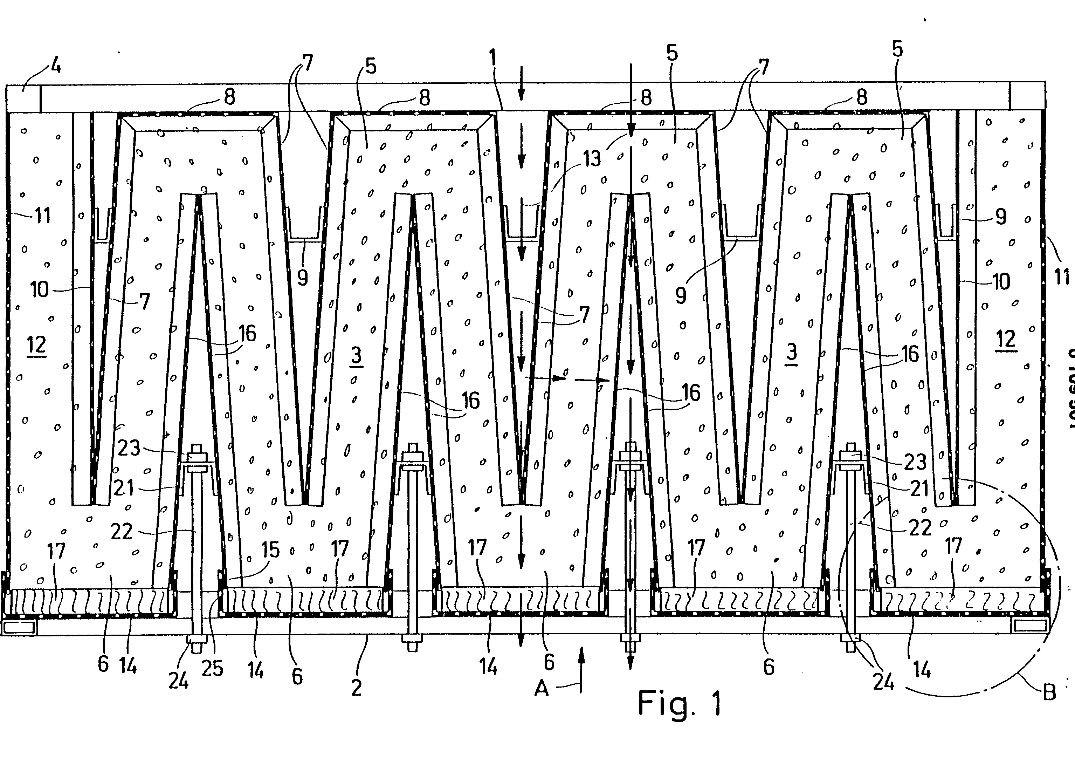

Die Figur 1 einen Schnitt durch die Draufsicht mit teilweise dargestelltem Filtermaterial,

die Figur 2 eine Ansicht in Richtung A und die Figur 3 die Einzelheit B der Figur 1.

Der Wechselfiltereinsatz wird von der Seite 1 her angeströmt, die Abströmung erfolgt aus der Seite 2. Das Medium folgt dabei etwa den Strömungslinien 13. Die Form des Einsatzes ist, von vorne gesehen, in etwa quadratisch, die Tiefe hängt von der Außenbildung des eigentlichen Filterbettes 3 ab. Auf die Anströmseite 1 ist eine umlaufende Dichtung 4 aus Gummi gesetzt, die die Abdichtung zwischen Roh- und Reinluftseite übernimmt. Der Einsatz wird somit mit der Seite 1 auf eine nicht dargestellte Zuluftöffnung in einem Filtergehäuse oder eines anderen Apparates gesetzt. Alle übrigen Seiten bzw. Flächen können dann neben der Abströmseite 2 auch noch zum Abströmen dienen, sofern sie aus Lochblechen bestehen und dies konstruktiv erwünscht wird.

Das Filterbett 3 ist in etwa mäanderförmig mit abgeflachten Ecken 5 und 6, die wechselseitig den An- und Abströmseiten 1 und 2 zugeordnet bzw. zugerichtet sind. Die Abflachungen 5 und 6 sind so gewählt, daß überall im Filterbett für das durchströmende Medium dieselbe Bettiefe vorliegt. Das Filterbett 3 besteht für einen vorliegenden Fall, der Absorption von Radiojod aus der Abluft kerntechnischer Anlagen, aus schüttfähigen Aktivkohlepartikeln als Absorptionsmittel, die nach Gebrauch ausgetauscht werden sollen. Ebenso kann das Filterbett 3 aus einem sog. Fiberpack bestehen, d. h. aus entsprechend gefalteten Fasermatten, wobei als Fasermattenmaterial Glas oder Edelstahl Verwendung findet. Es ist aufgebaut aus den, der Anströmseite 1 zugeordneten Lochblechtrennwänden 7, die mit ebenfalls gelochten Stirnwänden 8 versehen sind, die vor den Abflachungen 5 in der Ebene der Anströmseite 1 gelegen sind. Abstandshalterbleche 9 zwischen den Trennwänden 7 gewährleisten einen gleichmäßigen Trennwandabstand, um die Form des Filterbettes zu halten. Weitere Lochblechtrennwände 10 und seitliche Filtermaterialschichten 12 zwischen den Sorptionsmittelkammern stellen eine konstante Schichtdicke zur Seite bzw. zu einem benachbarten Einsatz hin sicher, wenn die Seitenwände 11 ebenfalls gelocht sind und als Abströmöffnung dienen.

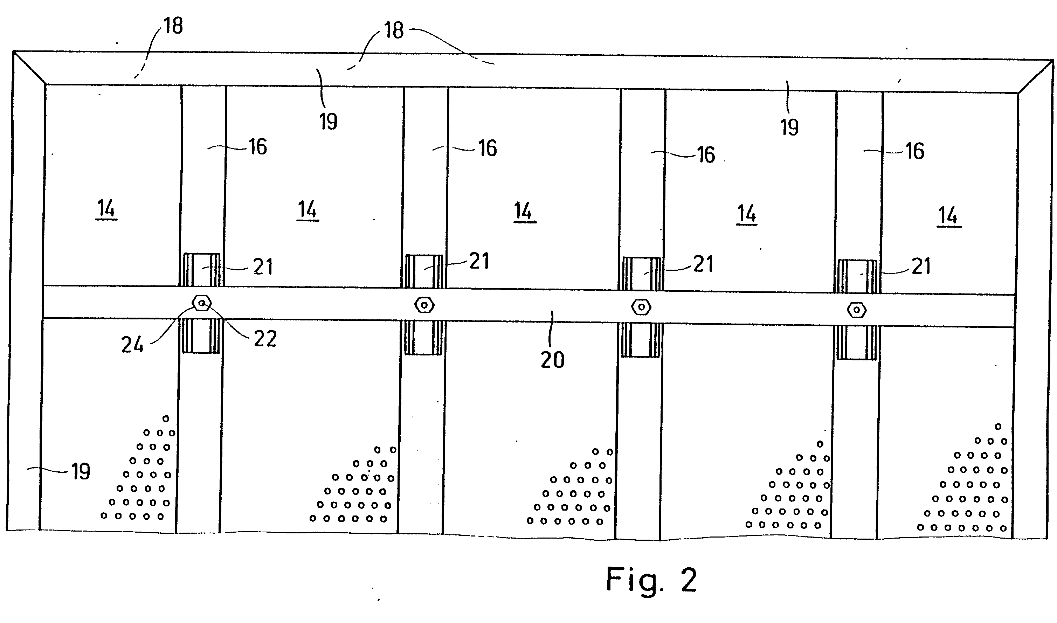

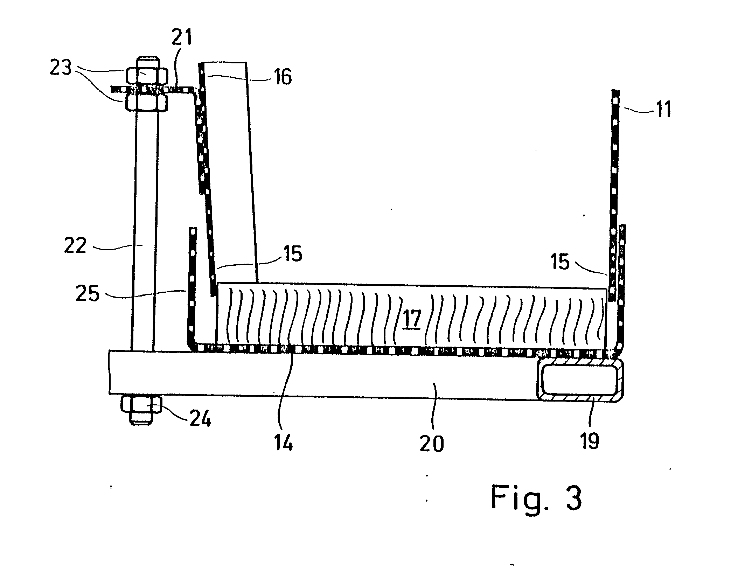

Die Abströmseite 2 der Filterzelle, die in der Figur 2 als Draufsicht dargestellt ist, weist als Besonderheit die Lochblechdeckel 14 auf, die die Abflachungen 6 nach außen hin begrenzen. Diese Deckel 14 übergreifen mit ihrem gezogenen Bund 25 den Rand 15 (siehe Figur 3) der Lochblechtrennwände 16 bzw. der Seitenwände 11 an der Abströmseite 2 ebenso wie den nicht dargestellten Boden der Filterzelle sowie die Eckplatte. Innerhalb der Deckel 14 sind, dem Filterbett 3 zugeordnet und innerhalb der Ränder 15, Anpreßplatten 17 aus Gummi oder luftdurchlässigem Kunststoff eingelegt, die dauerelastisch sind und die durch Verspannen der Deckel 14 zusammengedrückt werden. Diese Pressung erzeugt einen leichten Druck auf das Filterbett 3, wodurch die Homogenität verbessert wird. Die Deckel 14 haben rechteckige Form und werden an ihren, den Außenseiten der Filterzelle zugeordneten Rändern 18 mittels eines Rahmens 19 an die Anpreßplatten 17 gedrückt, wobei sie die Ränder 15 der Lochblechtrennwände 16 außen übergreifen.

Der Rahmen 19 weist eine oder mehrere Quertraversen 20 auf, die mit den Abstandshaltern 21 zwischen den Lochblechtrennwänden 16 der Abströmseite 2 verspannt sind. Die Verspannung erfolgt mittels Gewindestangen 22 und Muttern 23 bzw. 24, wobei die Gewindestangen 22 durch die Traverse 20 bzw. die Abstandshalter 21 gesteckt sind.

Soll nun das Filterbett 3 gewechselt werden, so wird nach Lösen der Muttern 24 der Rahmen 19 mit den Traversen 20 abgenommen. Danach können die Deckel 14 geöffnet werden und das Filtermaterial ist nach Wegnahme der Platten 17 zugänglich, kann entfernt und durch neues ersetzt werden. Dabei ist besonders von Vorteil, daß eine der Luftöffnungen der Filterzelle als Deckelöffnung zur Beschickung verwendet wird, wobei der Deckel quer zur Strömungsrichtung angeordnet ist und durchströmt wird.

Bezugszeichenliste

1 Anströmseite
2 Abströmseite
3 Filterbett
4 Dichtung
5 Ecken bzw. Abflachungen
6 Ecken bzw. Abflachungen
7 Lochblechtrennwände
8 Stirnwände
9 Abstandshalter
10 Lochblechtrennwände
11 Seitenwände
12 Seitliche Filtermaterialschicht
13 Strömungslinien
14 Lochblechdeckel
15 Rand
16 Lochblechtrennwand
17 Anpreßplatte
18 Deckelrand
19 Rahmen
20 Quertraverse
21 Abstandshalter
22 Gewindestangen
23 Muttern
24 Muttern
25 Bund

**Patentanspruch**

Wechselfiltereinsatz von in etwa quadratischer Form für den Einsatz in Filtergehäusen mit einem aus schüttfähigem Kontaktmaterial wie z. B. Aktivkohle oder Fibermaterialien aus z. B. Metallfasern gebildeten Filterbett zum Reinigen von Gas- oder Luftströmen, insbesondere radioaktive Stoffe enthaltende Abluft kerntechnischer Anlagen, wobei die Stirnflächen des Einsatzes die Zu- und Abströmseite und die Seitenflächen den Rahmen bilden, in welchem das zickzackförmig gefaltete und mit Lochblechen als Trennwände umhüllte Filterbett mit seinen Windungen, abwechselnd der Zu- und Abströmseite zugerichtet, untergebracht ist und die Windungen des Filterbettes der Abströmseite zugerichtete Abflachungen aufweisen, gekennzeichnet durch die folgenden Merkmale :

a) der den Abflachungen (6) zugeordnete Teil der Lochblechtrennwände (16) an der Abströmseite mit ihren Rändern (15) ist offen und durch Lochblechdeckel (14) verschließbar,

b) die Lochblechdeckel (14) übergreifen mit ihrem gezogenen Bund (25) die Ränder (15) der Lochblechtrennwände (16) bzw. der Seitenwände (11),

c) zwischen die Lochblechdeckel (14) und die Abflachungen (6) sind innerhalb der Ränder (15) Anpreßplatten (17) aus luftdurchlässigem Gummi oder Kunststoffmatten auf das Filterbett (3) gelegt,

d) die Lochblechdeckel (14) sind über einen, an ihren den Außenseiten des Einsatzes zugeordneten Rändern (18) angreifenden Rahmen (19) an die Anpreßplatten (17) gedrückt,

e) der Rahmen (19) ist mittels Gewindestangen (22), die durch Quertraversen (20) des Rahmens (19) und Abstandshalter (2) zwischen den Lochblechtrennwänden (16) gesteckt sind, gegen diese verspannbar.

**Claim**

Replaceable filter element approximately square shaped for insertion into filter housings with a filter bed formed by bulky contact material such as activated carbon or filter materials made e. g. from metal fibers for cleansing gas or air flows, especially radioactive substances carrying vent air from nuclear facilities, with the front faces of the filter element making up the upstream and downstream faces and the lateral faces the frame accommodating the zigzag pleated filter bed together with its convolutions surrounded by perforated plates as partitioning walls, alternately directed to the upstream and downstream faces and with the convolutions of the filter bed having flattened portions towards the downstream face, comprising :

a) that part of the perforated sheet metal walls (16) assigned to the flattened portions (6) being open on the downstream face with its edges (15) and capable of being closed through perforated sheet metal lids (14) ;

b) the perforated sheet metal lids (14) overlapping with their drawn collar (25) the edges (15) of the perforated sheet metal partitioning walls (16) and the lateral walls (11), respectively ;

c) contact plates (17) made from air transparent rubber or plastic mats placed onto the filter bed (3) between the perforated sheet metal lids (14) and the flattened portions (6) within the edges (15) ;

d) the perforated sheet metal lids (14) being pressed to the contact plates over a frame (19) applied to the edges (18) assigned to the outer faces of the filter element ;

e) the frame (19), which by means of threaded pins (22) inserted by cross traverses (20) of the frame (19) and spacers (2) between the perforated sheet metal partitioning walls (16), can be clamped to the latter.

**Revendication**

Garniture filtrante à échanger, de forme à peu près carrée, pour servir de garniture dans des carters de filtre, comportant un lit filtrant, formé de matériau de contact utilisable en vrac, comme par exemple du charbon actif ou des matériaux fibreux par exemple en fibres métalliques, pour purifier des flux de gaz ou d'air, en particulier l'air rejeté, contenant des matériaux radioactifs, des installations à base de technique nucléaire, étant précisé que ce sont les surfaces frontales de la garniture qui forment le côté arrivée et le côté départ et que ce sont les surfaces latérales qui forment le cadre dans lequel est logé le lit filtrant, plié en zigzag et entouré par des tôles perforées formant parois séparatrices, avec ses sinuosités alternativement dirigées vers le côté entrée et vers le côté sortie ; et étant précisé que les sinuosités du lit filtrant présentent des aplatissements dirigés côté sortie, caractérisée par les caractéristiques suivantes :

a) la partie des parois séparatrices en tôle perforée (16) correspondant aux aplatissements (6) est ouverte, côté sortie, par ses bords (15) et peut être obturée par des capots en tôle perforée (14),

b) les capots en tôle perforée (14) viennent recouvrir, par leur collet embouti (25), les bords (15) des parois séparatrices en tôle perforée (16) et des parois latérales (11),

c) entre les capots en tôle perforée (14) et les aplatissements· (6) sont placées sur le lit filtrant (3), à l'intérieur des bords (15), des plaques de compression (17) en caoutchouc ou tapis plastique perméable à l'air,

d) les capots en tôle perforée (14) sont appuyés contre les plaques de compression (17) par l'intermédiaire d'un cadre (19) qui vient au contact des bords (18) des capots associés aux faces extérieures de la garniture.

e) le cadre (19) peut être boulonné en direction des parois séparatrices en tôle perforée (16) au moyen de tiges filetées (22) enfilées dans des traverses (20) du cadre (19) et dans des écarteurs (2) situés entre ces parois séparatrices en tôle perforée.

Fig. 1

Fig. 2

Fig. 3

0 109 501